# EUROPEAN PATENT SPECIFICATION

(11) **EP 3 151 251 B1**
(45) Date of publication and mention of the grant of the patent: **06.05.2020**
(21) Application number: 15460089.4
(22) Date of filing: 30.09.2015
(51) Int. Cl.: H01B 11/12, H01B 1/04, H01B 7/00, C01B 32/182

(54) **SIGNAL CABLE AND ITS APPLICATION**
SIGNALKABEL UND DESSEN ANWENDUNG
CÂBLE DE SIGNAL ET SON APPLICATION

(43) Date of publication of application: 05.04.2017
(73) Proprietor: Rybka, Wojciech, 85-147 Bydgoszcz (PL)
(72) Inventor: Nawrocki, Piotr, 88-100 Inowroclaw (PL)
(74) Representative: Witkowska, Weronika

(56) References cited:
- CN-A- 103 123 830
- US-A1- 2013 140 059
- US-A1- 2013 319 727
- US-A1- 2013 322 891

## Description

The present invention is a signal cable and its application.

The signal cable is a cable for transferring high level input from an audio amplifier to a speaker or a loudspeaker. It is composed mainly of two wires insulated with plastic. It is most commonly described by the surface area of the conductor, as expressed in square millimeters, e.g. 2×1,5 mm², 2×2,5 mm², etc. The marking also uses AWG unit. A cable with a larger diameter makes less resistance to the signal.

The invention relates to graphene connecting wires, especially for audio systems, for example used to connect a turntable with preamplifier called interconnects in the audio industry and cables that connect a specific LF amplifier with a speaker system. These are crucial elements of a passive audio track. Wires connecting the turntable preamplifier and cables connecting the amplifier with the speakers are a very important part of a sound track often giving an ungroomed character to the sound of music programs, music, and affect the unreadability of musical instrument sounds and speech. The use of poor quality cables clearly breaks or degrades readability, colour, understanding and sound quality. Cables and wires form a kind of transmission medium for acoustic waves of the whole spectrum of the sound spectrum bands connecting the amplifier with speakers. They are supposed to transfer both the signal of small amplitude and large amplitude signal to and from an audio amplifier to a speaker or a loudspeaker. Therefore, their quality is extremely important if we want fidelity and quality of sound reproduction fed from the source to the amplifier, or for understanding, reading the information contained in the audio signal. Speaker cables and interconnects are made up mostly of two electrical conductors insulated with plastic. An important parameter of interconnects and speaker cables is a cross-section of electrical cable. Frequently described by the conductor surface area constructed of copper, expressed in square millimeters, for example 2×0,5 mm², 2×1 mm² (interconnects), 2×1,5 mm², 2×2,5 mm² (power cables), etc. A cable with a larger diameter makes less resistance to the signal which is favourable for direct impact on the power fed back into the speakers. Less power is dissipated in the transmission medium with a larger cross-section so more energy (power) arrives at the speakers. This is important information directly relating to users of audiophile tube power amplifiers in SE (Single End) configuration, whose output power is approx. 8, for amplifiers built on tubes, for example 300B, 2A3 and similar or transistor amplifiers working in the class A. with an output power not usually exceeding approx. 15 W.

Similar expectation apply to the cables connecting the turntable and the preamplifier. But in this case we do not use and do not have high power of the transmitted signal more resistant to external interference. On the contrary, in the interconnects we are dealing with small signals, where very high resistance is important and their susceptibility to interference reaching and besieging them from the outside negligible. When strengthening this type of signals minimal own medium, i.e. interconnects, noise is necessary and indeed indispensable. Unwanted own characteristics, though characteristic of each medium, will always be present, i.e. capacitance, inductance, resistivity, which have a direct impact on the spectrum and audio quality, or the quality of information, which is reinforced in subsequent stages audio system can affect the information.

The publication CN 103123830 A discloses a layered material, wherein the graphene is "located" between the insulating and conductive material in the form of two-dimensional monatomic or polyatomic structured layer. The insulating material proposed is, polyethylene, polyvinyl chloride, etc. And the conductive material proposed is copper, aluminum, silver or gold. According to the publication CN 103123830 A the layered material to be wound into a roll in order to obtain the desired effect, then one, two or more such rolls placed in a rubber tube to obtain cable for high voltages. The disadvantage of this is the use of precious metals as a conductive material, which increases the cost of the production of cables, as well as the necessity of rolling the roll, which is not convenient for the production of such cables and causes additional costs. The power cable is known from CN 103123830 A is also not suitable as a signal cable for connecting audio, video or measurement devices.

Also the publication CN 203617033 U represents the utility model of cable for high voltages, which comprises several rollers in the middle, wherein each roll has a material containing a microchip with graphene uniformly dispersed in polyethylene. The diameter of the graphene microchips is not greater than 10 microns.

The publication CN 103811095 A discloses graphene cable comprising a metal core and a layer of graphene. The layer of graphene comprises from 1 to 10 layers of graphene deposited from vapour on a metal core. The metal core is made of copper, iron, aluminium or other metals, it may also be covered with another metal from the group: scandium, titanium, silver, chromium, manganese, iron, cobalt, nickel, copper, zinc, technetium, ruthenium, silver, cadmium , lutetium, hafnium, tantalum, tungsten, rhenium, osmium, iridium, molybdenum, gold, etc.

US2013319727 (A1) discloses an aircraft conductor sandwich assembly configured to be embedded in a composite aircraft structure. The conductor sandwich assembly comprises a plurality of carbon conductors disposed between two sheets of insulating layers and an adhesive resin bonding the plurality of carbon conductors and the two sheets of insulating layers into a carbon sandwich assembly such that (i) the conductors are electrically isolated and (ii) structural loads can be passed through said conductor sandwich assembly.

According to the invention, a signal cable is provided as defined in claim 1. Further developments of the invention are the subject of the dependent claims.

According to an aspect of the invention, the graphene layer is in a two-dimensional form.

Preferably, the polymer layer is a polymer selected from the group consisting of polyethylene terephthalate (PET), polyethylene naphthalate (TEN), polyethersulfone (PES), and polycarbonate (PC), polypropylene (PP), poly(ethylene oxide) (PEO), poly(vinyl chloride) (PVC), synthetic rubber, most preferably: polyethersulfone (PES), polycarbonate (PC).

Preferably, the protective layer is a layer with a very high resistance, preferably made of a material selected from the group including: Teflon™, polyethylene terephthalate (PET), polypropylene (PP), poly(vinyl chloride) (PVC), synthetic rubber.

Preferably, the graphene is in its pure or doped form.

Preferably, each of the connectors includes plugs: the first plug for connecting a signal transmitter, and a second plug intended for connection to a signal receiver electrically connected by a connecting part.

According to claim 7, the invention further encompasses the use of the signal cable to transmit the signal between a transmitter and a receiver of an audio system.

The invention will now be further described in the preferred embodiment, with reference to the accompanying drawings, in which:
- Fig. 1: shows a cross section of the interconnect (speaker wire) of the invention embodiment.
- Fig. 2: shows the physical form of the medium on the basis of graphene to be used for interconnects.
- Fig. 3: shows the physical form of the medium on the basis of graphene to be used for speaker cables.
- Fig. 4: shows the connection of sound sources with preamplifier and power amplifier,
- Fig. 5: shows the combination of an amplifier with loudspeaker system.

Moreover, the figure uses the following indications: 1 - graphene; 2 - polymer; 3 - the protective layer, for example Teflon™; 4 - preamplifier and amplifier; 5 - signal source, e.g. DVD / CD player; 6 - speakers.

### Preferred embodiment of the invention

### The principle of operation

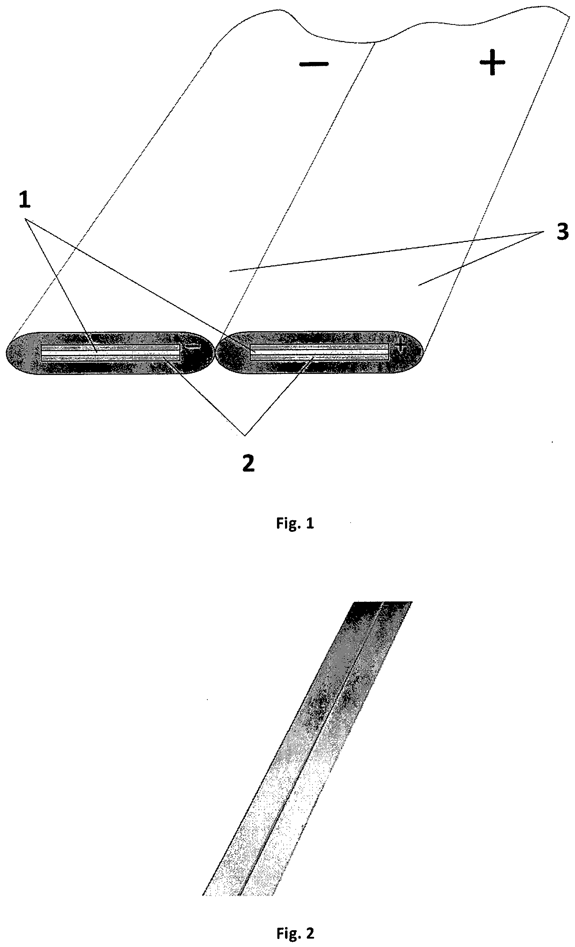

Presented wires, both interconnects and speaker wires contain a graphene layer 1 disposed between two polymer layers 2, which is not the signal carrier. Transmission medium is graphene. Said polymer layer 2 is a polymer selected from the group consisting of polyethylene terephthalate (PET), polyethylene naphthalate (TEN), polyethersulfone (PES), and polycarbonate (PC), polypropylene (PP), poly(ethylene oxide) (PEO), poly(vinyl chloride) (PVC), synthetic rubber, most preferably: polyethersulfone (PES), polycarbonate (PC), which ensure its integrity, hardness, flexibility, resistance to compression. Graphene layer 1, provides a very good conductive properties while maintaining the transparency of the material. Interconnects (wires) are enclosed in a protective Teflon™ insulation layer 3 with a very high resistance, which is so inert that it does not affect the nature of the transmitted information. Graphene layer 1 is homogeneous and forms a surface characterised by a uniform level of electro-acoustic-wave propagation, which is audio signal composed in many ways. Accordingly, due to the fact that graphene has a two-dimensional structure (homogeneous) electrons move in one, or in a controlled plane (as free electrons) to either the front or the back (in copper as free electrons they move chaotically and in multidimensional structure). The cross-section of a medium for the transmission of sonic signals built on the basis of graphene is shown in Fig. 1.

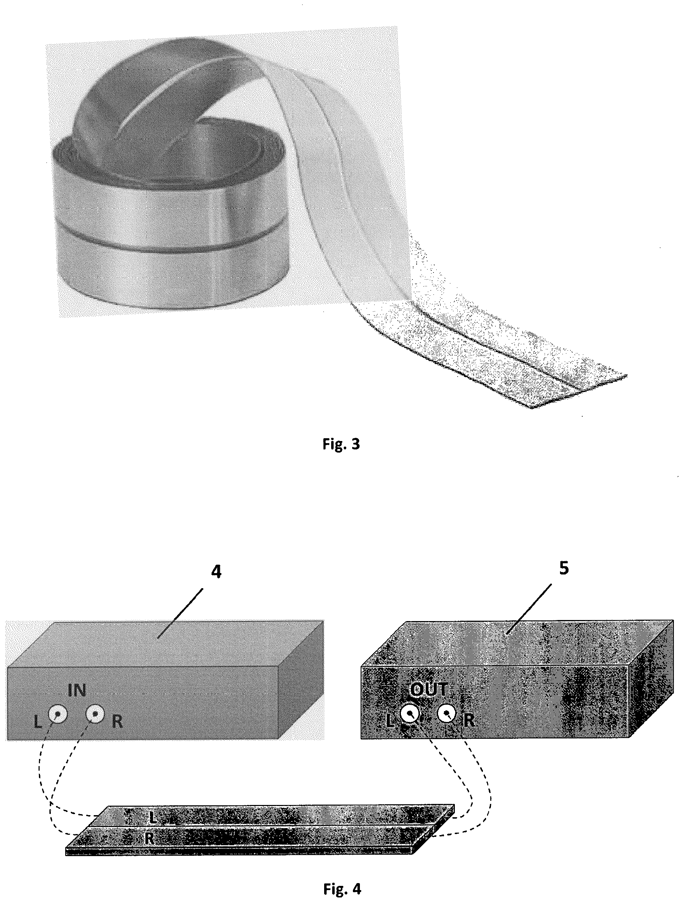

Cables built with graphene provide high level of electroacoustic properties, which is a transmission medium of almost perfect characteristics. Reference signal, in this case, from the source 5 which is a turntable, a preamplifier, a power amplifier, seen as the output signal is matched in phase of the signal, the minimum power loss, a short propagation time, a short unit of time for transmission of energy of low-frequency to a load which are speakers, low noise floor, it is almost identical to the reference signal source. It is characterised by considerable indifference to inducing a spurious HF electromagnetic energy (High Frequency Energy) that passes through the presented cable in its various sections, and also has a resistance to RFI (Radio Frequency Interference) and EMI (Electro Magnetic Interference), which comes with a minimum capacity and inductance of the electrical structure of graphene. In addition, the presented passive elements of the audio track meet the requirements for mechanical strength. The physical form of a medium for the transmission of sonic signals built on the basis of graphene is shown in Fig. 2 and Fig. 3. Fig. 2 shows the physical form of the medium on the basis of graphene to be used for interconnects, and Fig. 3 shows the physical form of the medium on the basis of graphene to be used for speaker cables.

Commonly used speaker cables have a sufficiently large cross-sections depending on the power of an audio amplifier, so as not to cause loss of power. The thinner the cross-section, the higher the resistivity, so more power loss hangs on the cable and less on the speaker terminals. Minimum wire cross-section (medium) connecting the amplifier with the speaker system should have a larger cross-section than the calculated one, but it should not be less. It should be mentioned here that an important determinant of minimum quality speaker cables is so called damping coefficient. It is an important parameter for electroacoustics laws given in the amplifier manual as Damping Factor (DF).

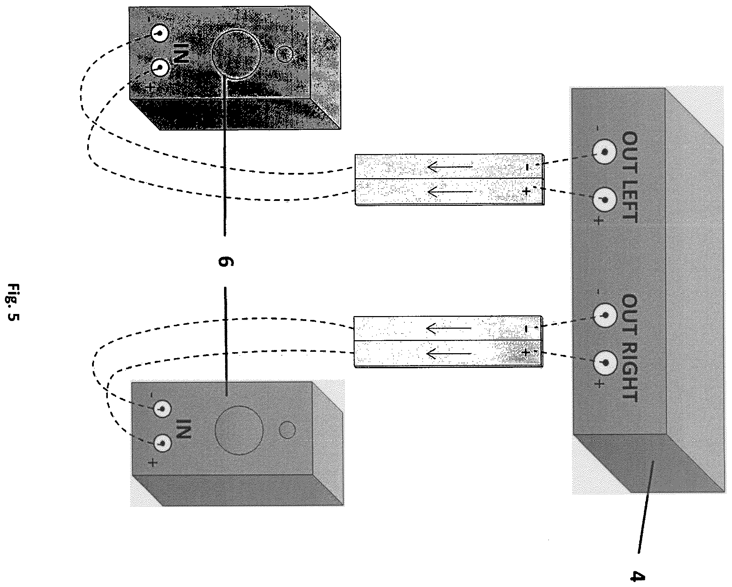

For the calculation of the minimum cross-section of a single conductor of a speaker cable, a definite damping coefficient for the entire system, amplifier, cables, speakers is assumed, but no more than given by the manufacturer of the amplifier (DF). Usually it is 200 (at 1kHz for 8Ω load at 4Ω will be higher), although this value often increases at low frequencies and can even reach 1400. Assuming higher values of DF creates higher demands for the system for efficiency and, as one may guess, larger cross-sections of wires are used. These considerations apply to cables commonly used in audio equipment, as well as due to the relatively large parasitic phenomena relating to options other than graphene options. The connection of sound source 5 with preamplifier or amplifier 4 is shown in Fig. 4. In contrast, connection of amplifier 4 with a loudspeaker system 6 is shown in Fig. 5.

In the proposed solution there is no need to use thick, heavy cables, if with no loss of sonic qualities better, thinner, lighter, faster cables and interconnects can be used. The use of graphene cable to the speakers or loudspeaker also eliminates other problems with the speaker cables, which in the case of using a cable built based on graphene technology compared to technology based on, for example, copper almost does not exist, i.e. oscillations of the parasitic nature over acoustic. Such oscillations can be clearly seen on the oscilloscope. Their symptom is usually unjustified heating of the amplifier heat sink, even with minimal input signal, and even in its absence due to the nature of the medium (inductance, capacitance, resistance). The formation of oscillations of a hum impact of SEM (strength of electromagnetic energy at a frequency of 50 Hz and harmonics) of high-field inductions in interconnects and audio cables. Oscillations can cause hyperactivity of the protection circuitry, resulting in malfunction of the amplifier. In the case of the use of these media active audio tracks can be minimized, so low pass filters in the amplifier degrading sound, bindings (twisting) of the conventional speaker cables brought out of the power amplifier or can be dispensed with. What affects the appearance of parasitic capacitance and lowering the frequency response of audio bandwidth thereby worsening the quality of sound reproduction.

### Characteristics

It is well known that every element of the acoustic route and the design of preamplifiers and power systems, medium (transmission line) has an impact on the nature of sound quality SVM drive amplifier, and consequently speaker units. The type and quality of the components used to build audio transmission paths connecting the particular microphone preamplifiers, CD and DVD drives with power amplifiers and speaker systems have significant and not contestable influence on the character and quality of sound creation. In a situation where we use the media presented one has the impression that the character of the sound is created only by active elements. The transmission line - the presence of media on the basis of graphene in terms of acoustics is not felt. Transmission, reproduction and creation of sound occur by means of active audio track.

The use of interconnects and speaker cables constructed on the basis of graphene has a positive effect on the operation of individual degrees LF and significantly affects the quality and fidelity of sound reproduction by the system or audio device.

The present invention relates to transmission media, i.e. Interconnects and speaker cables made of graphene, which have the following characteristics:
- The vast flow velocity of electrons, about 1/300 the speed of light is the flow of electrons in the medium of graphene.
- They are characterised by substantial indifference to ubiquitous electromagnetic energy interference with low and high field intensity at high frequencies.
- Almost no formation of oscillations of a hum under the influence of electromagnetic energy at a frequency of 50 Hz and harmonics of high electromagnetic field intensity generated by long power cables, transformers, power supply circuits, etc.
- Very small capacitance, inductance and resistivity. Therefore, the said parameters minimally affect the sonic qualities of the audio systems working on graphene-based media.
- Very good mechanical strength and low weight compared to interconnects, cables built in technology based on, for example, copper, etc.
- Lack of parasitic excitation of audio sets of over-acoustic character present compared to cable interconnects constructed in technology based on copper.
- Lack of additional electromagnetic screens, which often in addition to improving these properties and performance degrade them and generate unnecessary costs.
- First and foremost they are characterised by pure, detailed, neutral, fully controlled sound reaching our consciousness, subconscious and superconscious.

### Examples of the use of the subject of the application

Presented passive elements of the audio track can be used both in professional and commercial audio-video equipment. Presented transmission media are especially recommended to: electroacousticians, sound engineers and producers, musicians, music lovers, audiophiles, etc.

Interconnects can also be part of a larger whole, i.e. the microphone track, alone or being part of a mixer, console, including additional signal processors, such as, for example a noise gate, filters, dynamics compressors, parametric equalisers, limiters, and other types of equipment used in the audio art.

They can also act as media for connections: analogue, audio signals, mono, stereo, video signal, composite, RGB, aerial, digital connections, multi-channel, etc.

In order to minimise the potential risks of the work of cables as part of propagation and receiving items, i.e. sending and receiving antenna for frequencies above sound, which can cause harmful oscillations, e.g. a power amplifier, it is necessary to keep a greater distance between the speaker and input wires (low current). The problem often occurring with power amplifiers are the low-frequency acoustic currents, which occur most often when connected to the load of an inductive character, for example, speaker transformers in these tube amplifiers SE, though often in poorly designed transformers tube in push-pull amplifiers. Not only expensive audio amplifiers are equipped with active protection circuits speakers, as well as systems analysing interdependencies between inputs and outputs quickly correcting performance characteristics of the amplifier. In a situation in which de facto degradation of the audio signal information occurs. Using these graphene media we avoid these undesirable effects of electro-physical phenomena.

## Claims

1. A signal cable for transmitting signals between a transmitter and a receiver of an audio system, wherein electrical connection is provided by at least one connecting part comprising a graphene layer disposed on a polymer layer, **characterised in that** it comprises exactly two parallel insulated conductors, each insulated conductor including a single connecting part arranged in a protective insulating layer (3), whereby the connecting part is in a tape form having a two-dimensional graphene layer (1) disposed between two polymer layers (2), and wherein the two insulated conductors are connected together along an edge of the protective insulating layer (3).

2. The signal cable according to claim 1, **characterised in that** the polymer layer (2) made of a polymer selected from the group consisting of polyethylene terephthalate (PET), polyethylene naphthalate (PEN), polyethersulfone (PES), polycarbonate (PC), polypropylene (PP), poly(ethylene oxide) (PEO), poly(vinyl chloride) (PVC) and synthetic rubber.

3. The signal cable according to claim 1 or 2, **characterised in that** the protective insulating layer (3) is a layer having very high resistance.

4. The signal cable according to claim 3, **characterised in that** the protective insulating layer (3) is made of a material selected from the group consisting of polytetrafluoroethylene, polyethylene terephthalate (PET), polypropylene (PP), poly(vinyl chloride) (PVC) and synthetic rubber.

5. The signal cable according to any of claims 1-4, **characterised in that** the graphene layer (1) is made of either pure or doped graphene.

6. The signal cable according to any one of claims 1-5, **characterised in that** each insulated conductor has a first plug for connecting to the signal transmitter and a second plug for connecting to a signal receiver of the audio system.

7. Use of the signal cable defined in any of claims 1 to 6 for signal transfer between a transmitter and a receiver of an audio system.

## Patentansprüche

1. Signalkabel zur Übertragung von Signalen zwischen einem Sender und einem Empfänger eines Audiosystems, wobei die elektrische Verbindung durch mindestens ein Verbindungsteil, das eine auf einer Polymerschicht angeordnete Graphenschicht umfasst gewährleistet ist, **dadurch gekennzeichnet, dass** es genau zwei parallele isolierte Leiter umfasst, wobei jedes isolierte Leiter, das ein einziges Verbindungsteil aufweist, in einer schützenden Isolierschicht (3) angeordnet ist, wobei das Verbindungsteil in Bandform mit einer zweidimensionalen Graphenschicht (1) vorliegt, zwischen zwei Polymerschichten angeordnet ist und wobei die beiden isolierten Leiter entlang einer Kante der schützenden Isolierschicht miteinander verbunden sind (2).

2. Das Signalkabel nach Anspruch 1, **dadurch gekennzeichnet, dass** die Polymerschicht (2) aus einem Polymer ausgewählt aus der Gruppe bestehend aus Polyethylenterephthalat (PET), Polyethylennaphthalat (PEN), Polyethersulfon (PES), Polycarbonat (PC), Polypropylen (PP), Poly(ethylenoxid) (PEO), Poly(vinylchlorid) (PVC) und synthetischem Kautschuk besteht.

3. Das Signalkabel nach Anspruch 1 oder 2, **dadurch gekennzeichnet, dass** die schützende Isolierschicht (3) eine Schicht mit sehr hohem Widerstand ist.

4. Das Signalkabel nach Anspruch 3, **dadurch gekennzeichnet, dass** die schützende Isolierschicht (3) aus einem Material ausgewählt aus der Gruppe bestehend aus Polytetrafluorethylen, Polyethylenterephthalat (PET), Polypropylen (PP), Poly(vinylchlorid) (PVC) und synthetischem Kautschuk hergestellt ist.

5. Das Signalkabel nach einem der Ansprüche 1-4, **dadurch gekennzeichnet, dass** die Graphenschicht (1) entweder aus reinem oder dotiertem Graphen hergestellt ist.

6. Das Signalkabel nach einem der Ansprüche 1-5, **dadurch gekennzeichnet, dass** jedes isolierte Leiter einen ersten Stecker für das Verbinden an den Signalsender und einen zweiten Stecker für das Verbinden an einen Signalempfänger des Audiosystems hat.

7. Verwendung des in einem der Ansprüche 1 bis 6 definierten Signalkabels zur Signalübertragung zwischen einem Sender und einem Empfänger eines Audiosystems.

## Revendications

1. Câble de signal pour transmettre des signaux entre un émetteur et un récepteur d'un système audio, dans lequel la connexion électrique est assurée par au moins une pièce de connexion comprenant une couche de graphène disposée sur une couche de polymère, **caractérisé en ce qu'**il comprend exactement deux conducteurs isolés parallèles, chaque conducteur isolé comprenant une seule pièce de connexion disposée dans une couche isolante de protection (3), grâce à quoi la pièce de connexion est sous forme d'une bande ayant une couche de graphène bidimensionnelle (1) disposée entre deux couches de polymère (2) et dans lequel les deux conducteurs isolés sont connectés ensemble le long d'un bord de la couche isolante de protection (3).

2. Câble de signal selon la revendication 1, **caractérisé en ce que** la couche de polymère (2) est faite d'un polymère choisi dans le groupe constitué par le polyéthylène téréphtalate (PET), le polyéthylène naphtalate (PEN), le polyéthersulfone (PES), le polycarbonate (PC), le polypropylène (PP), le poly(oxyde d'éthylène) (PEO), poly(chlorure de vinyle) (PVC) et le caoutchouc synthétique.

3. Câble de signal selon la revendication 1 ou 2, **caractérisé en ce que** la couche isolante de protection (3) est une couche à très haute résistance.

4. Câble de signal selon la revendication 3, **caractérisé en ce que** la couche isolante de protection (3) est faite d'un matériau choisi dans le groupe constitué par le polytétrafluoroéthylène, le polyéthylène téréphtalate (PET), le polypropylène (PP), le poly(chlorure de vinyle) (PVC) et le caoutchouc synthétique.

5. Câble de signal selon l'une quelconque des revendications 1 à 4, **caractérisé en ce que** la couche de graphène (1) est faite de graphène pur ou dopé.

6. Câble de signal selon l'une quelconque des revendications 1 à 5, **caractérisé en ce que** chaque conducteur isolé a une première fiche pour se connecter à l'émetteur de signal et une seconde fiche pour se connecter à un récepteur de signal du système audio.

7. Utilisation du câble de signal défini dans l'une quelconque des revendications 1 à 6 pour le transfert de signal entre un émetteur et un récepteur d'un système audio.
